(19) Europäisches Patentamt
European Patent Office
Office européen des brevets

(11) **EP 4 277 109 A1**

(12) **EUROPEAN PATENT APPLICATION**

(43) Date of publication:
**15.11.2023 Bulletin 2023/46**

(21) Application number: **22172910.6**

(22) Date of filing: **12.05.2022**

(51) International Patent Classification (IPC):
*H02M 7/483* (2007.01)      *H02M 7/49* (2007.01)
*H02M 1/12* (2006.01)       *H02M 1/00* (2006.01)
*H02J 3/18* (2006.01)

(52) Cooperative Patent Classification (CPC):
**H02M 7/4835; H02J 3/1842; H02M 1/0012;
H02M 1/0067; H02M 1/12; H02M 7/49**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ABB SCHWEIZ AG
5400 Baden (CH)**

(72) Inventors:
• SCHWEIZER, Mario
  5406 Rütihof (CH)
• KIEFERNDORF, Frederick
  5400 Baden (CH)

(74) Representative: **Qip Patentanwälte
Dr. Kuehn & Partner mbB
Goethestraße 8
80336 München (DE)**

(54) **CARRIER BASED MODEL PREDICTIVE CONTROL FOR CONVERTER WITH FILTER CELLS**

(57)    An electrical converter (10) comprises a main stage (12) adapted for converting a DC voltage into an intermediate voltage comprising at least two voltage levels and a filter cell stage (14) with a filter cell (30) for each phase of the intermediate voltage, each filter cell (30) being adapted for adding or subtracting a cell voltage of the filter cell (30) to the intermediate voltage. A method for controlling an electrical converter (10) comprises a pattern determination part (44) comprising the steps of: determining a main pulse pattern (60) for the main stage (12) with pulse width modulation, wherein the main pulse pattern (60) is determined from a voltage reference signal ($V_{ref,abc}$) for the output voltage and wherein the main pulse pattern (60) comprises switching instants for the main stage (12) over a next modulation period of the main stage (12); and determining a cell pulse pattern (70) for the filter cell stage (14) with pulse width modulation, wherein the cell pulse pattern (70) is determined from a difference of the voltage reference signal ($V_{ref,abc}$) and a main stage voltage signal (62) determined from the main pulse pattern (60) and wherein the cell pulse pattern (70) comprises switching instants for the filter cells (30) over the next modulation period. The method comprises further a model predictive control part (46) comprising the following steps, which are performed several times during the next modulation period: modifying the main pulse pattern (60) and the cell pulse pattern (70) by moving at least one transition time of a switching instant, such that a flux error determined from a difference between an estimated flux of the electrical converter and a reference flux trajectory (76) is minimized; and applying at least a next switching instant from the main pulse pattern (60) and the cell pulse pattern (70) to the electrical converter (10).

Fig. 2

**Description**

FIELD OF THE INVENTION

The invention relates to the field of high power converter control. In particular, the invention relates to a method, a computer program, a computer-readable medium and a controller for controlling an electrical converter. The invention also relates to the electrical converter.

BACKGROUND OF THE INVENTION

In particular in medium voltage applications, a cost effective electrical converter topology with high power quality is given with the 3L(A)NPC+AF topology. Here, 3L means 3 level, (A)NPC means (active) neutral point clamped and AF means active filter. This topology has been proposed years ago. However, optimized hardware design, reliable control and failure-proof operation is still a challenge.

One of the main advantages of the topology are the small voltage steps that can be generated. The small voltage steps reduce the machine-side dv/dt and overvoltages, as well as the current THD (total harmonic distortion) and involved harmonic losses in the machine. To fully benefit from the improved power quality, a control scheme needs to cover the entire range of operating points of the machine, from low speed to high speed. Previously developed control schemes work with optimized pulse patterns (OPPs) which are computed offline and cover medium speed to high speed operation. For low speed operation (such as below 50% of a nominal speed) and stand-still operation, a new control scheme, which does not rely on OPPs, would be beneficial.

WO 2018 029303 A1 relates to a two stage control of a converter system with floating filter cells, in which the floating filter cells are directly controlled.

EP 3 709 497 A1 describes a cascaded real-time pulse width modulation approach, where the main converter is modulated with a low switching frequency and subsequent filtering stages with filter cells are modulated with an increasing switching frequency.

In EP 2 469 692 A1, optimized pulse patterns are modified based on model predictive control. Pre-computed optimized pulse pattern switching angles are modified online in order to follow a flux trajectory.

EP 3 729 637 A1 relates to model predictive control of a converter based on pulse width modulation. Pulse patterns are created with a mathematical representation of pulse width modulation and modified with model predictive control.

WO 2019 137 916 A1 relates to model predictive control of a converter based on pulse width modulated switching patterns without filter cells.

DESCRIPTION OF THE INVENTION

It is an objective of the invention to improve the control of an electrical multi-level converter with filter cells. Further objectives of the invention are to reduce the computational demand of such a control method and to reduce total harmonic distortion and losses of the electrical converter.

These objectives are achieved by the subject-matter of the independent claims. Further exemplary embodiments are evident from the dependent claims and the following description.

An aspect of the invention relates to a method for controlling an electrical converter. The electrical converter may be a medium or high voltage converter adapted for processing voltages up to 6.6kV or more.

According to an embodiment of the invention, the electrical converter comprises a main stage adapted for converting a DC voltage into an intermediate voltage comprising at least two voltage levels. The main stage may comprise one or more (A)NPC half-bridges, which are connected in parallel to a DC link. The output of the half-bridges may be the intermediate voltage, which may be a multi-phase, in particular three-phase voltage. Dependent on the topology of the main stage, the output voltage may have two, three, five or more voltage levels. In the case of 3L(A)NPC half-bridges, there may be three output voltage levels.

According to an embodiment of the invention, the electrical converter further comprises a filter cell stage with a filter cell for each phase of the intermediate voltage, wherein each filter cell is adapted for adding or subtracting a cell voltage of the filter cell to the intermediate voltage. Each filter cell may comprise a cell capacitor providing the cell voltage, which is connected in parallel with two half-bridges providing an input and an output of the filter cell. The filter cell stage may be seen as an active filter of the electrical converter.

According to an embodiment of the invention, the method comprises a pattern determination part comprising the steps of: determining a main pulse pattern for the main stage with pulse width modulation, wherein the main pulse pattern is determined from a voltage reference signal for the output voltage and wherein the main pulse pattern comprises switching instants for the main stage over a next modulation period of the main stage; determining a cell pulse pattern for the cell stage (or filter cell stage) with pulse width modulation, wherein the cell pulse pattern (or filter cell pulse pattern) is determined from a difference of the voltage reference signal and a main stage voltage signal determined from the main pulse pattern and wherein the cell pulse pattern comprises switching instants for the filter cells over the next modulation period of the main stage.

The next modulation period of the main stage may be half a carrier period or one or several carrier periods of the pulse width modulation.

In general, two pulse patterns, a main pulse pattern for the main stage and a cell pulse pattern for the filter cell stage, are determined. Each pulse pattern is or comprises one or more sequences of switching instants over a specific time interval, the modulation period. A switching instant indicates a time point and/or transition time and switch positions to be switched to at the time point.

The main pulse pattern is determined from the voltage reference signal for the output voltage, which may be provided by an outer control loop. The cell pulse pattern is determined from the difference of the voltage reference signal and a main stage voltage signal. The main stage voltage signal may be determined from the main pulse pattern by determining an output voltage level generated by the main pulse pattern over time.

In pulse width modulation, a signal (here the voltage reference signal for the output voltage or the difference of the voltage reference signal and a main stage voltage signal) is crossed with a triangle signal with a carrier frequency higher as the frequency of the signal. The crossing points are then used as time point and/or transition times for a switching instant. In the present method, pulse width modulation is done by a mathematical function of the controller, which performs the method.

It has to be noted that the main pulse pattern and the cell pulse pattern may be multi-phase quantities, i.e. there may be switching instants for every phase.

According to an embodiment of the invention, the method comprises a model predictive control part comprising the following steps, which are performed several times during the next modulation period: modifying the main pulse pattern and the cell pulse pattern by moving at least one transition time of a switching instant, such that a flux error determined from a difference between an estimated flux of the electrical converter and a reference flux trajectory is minimized; and applying at least a next switching instant from the main pulse pattern and the cell pulse pattern to the electrical converter.

The model predictive control part as well as the model predictive control may be performed like in EP 2 469 692 A1, which is incorporated by reference. Also, in the chapter "pattern controller" of EP 3 729 637 A1, which is incorporated by reference, model predictive control of pulse patterns created based on pulse width modulation is described.

The model predictive method tries to optimize a control objective, which may be modelled with an objective function. The objective function is a function depending on parameters and quantities determined from the two pulse patterns with time-shifted switching instants. Pulse patterns with time-shifted switching instants are searched, which minimize the objective function.

The objective function is modelled to minimize a flux error between an estimated flux of the electrical converter and the reference flux trajectory. The actual, estimated flux may be determined from measurements in the electrical converter.

When the two pulse patterns have been optimized, a next switching instant is applied to the electrical converter, i.e. the main stage and/or the filter cell stage. This is done by switching the switches of the main stage and/or the filter cell stage to a position as demanded by the switching instant.

The model predictive control part can be repeated with the same pulse patterns and reference flux trajectory as determined in the pattern determination part. The same main pulse pattern and the same cell pulse pattern as determined by the pattern determination part may be again used in the model predictive control part at a later time instant, for again calculating the then next switching instant.

The model predictive control part is performed much more often, meaning with a higher execution frequency, as the pattern determination part. In the pattern determination part, the two pulse patterns are provided, for example as a look-up table. In the model predictive control part, the two pulse patterns are used as input for the optimizer, which shifts the transition times, several times.

The pattern determination part computes the nominal pulse patterns for the main stage and the filter cell stage online repeatedly for the upcoming modulation period, for example using carrier-based pulse width modulation. Then, based on the two pulse patterns, the accurate flux reference trajectory is precomputed for the modulation period. Finally, the pulse patterns and the flux reference trajectory may be written into look-up tables and passed to the model predictive control part. The model predictive control part ensures closed loop control by tracking of the provided flux reference trajectory with online-modifications of the provided pulse patterns.

To avoid that the model predictive control part modifies the pulse patterns, such that a balancing of the filter cells is destroyed, the flux reference trajectory is precomputed online using the previously computed pulse patterns. Due to specific characteristics of pulse width modulation, precomputation of the flux reference trajectory can be done online without high computational burden. This not only ensures that a cell voltage balancing algorithm works as intended, but also simplifies balancing of the neutral point potential of the main stage.

The pattern determination part may be used in particular for low speed operation, for example when the output voltage frequency is less than 20 Hz. For higher speeds, optimized pulse patterns for the main stage and the filter cell stage may be used instead of the main pulse pattern and the cell pulse pattern, which have been determined with pulse width modulation. Consequently, for the model predictive control part it is not required to maintain two different control schemes for low speed and nominal speed operation and/or to implement complicated switch-over logic.

According to an embodiment of the invention, the pattern determination part further comprises: determining the flux reference trajectory over the next modulation period from the main pulse pattern and the cell pulse pattern. This may be done by integrating the sum of the output voltage of the main stage as indicated by the main pulse pattern and the output voltage of the filter cell stage as indicated by the cell pulse pattern.

The flux reference trajectory may be a vector quantity, for example with a component of each phase or a vector quantity in the orthogonal reference frame described with two components.

The reference flux trajectory may be determined for a specific angle range, which corresponds to the next modulation period for which the pulse patterns (i.e. the main pulse pattern and the cell pulse pattern) are determined. The usage of the reference flux trajectory may be beneficial, because it includes the flux ripple and therefore matches with the pulse patterns. Consequently, without outer disturbances, the pulse patterns are applied without modifications.

It also may be possible to directly use a circular flux trajectory as reference flux trajectory. However, in this case the pattern switching instants may be modified by the model predictive controller to better match a circle and therefore may overwrite the adjustments and may disturb the cell balancing goal.

According to an embodiment of the invention, the method further comprises: determining one or more differential mode components of an average (output) voltage reference for the filter cells, which may be determined from measurements in the filter cells, and subtracting the differential mode component(s) from the voltage reference signal before the main pulse pattern is determined. For the average output voltage reference, the capacitor voltages of the filter cells may be measured, compared to capacitor voltage references and further manipulated, to generate a filter cell average output voltage reference signal.

According to an embodiment of the invention, each phase of the average output voltage reference corresponding to a filter cell is based on a difference of a measured capacitor voltage signal of the filter cell and a reference capacitor voltage of the filter cell. The capacitor voltage signals may be filtered with a low pass filter to reduce ripple and a capacitor voltage reference may be subtracted. The average output voltage reference of a filter cell may be the output signal of a difference of a measured capacitor voltage signal of the filter cell and a reference capacitor voltage of the filter cell, subsequently processed with a proportional integral (PI) controller. The common mode signal, i.e. the sum of the phase components of the average output voltage reference, is then subtracted from the average output voltage reference signal of each cell to compensate only the differential mode components of the average output voltage reference.

According to an embodiment of the invention, the method further comprises: adjusting the cell pulse pattern in the pattern determination part of the method; wherein during adjusting, switching instants of the cell pulse pattern are moved, such that average voltages generated by the filter cells by the cell pulse pattern are shifted towards average output voltage reference of the filter cells, which is determined from measurements in the filter cells. The average output voltage reference of the filter cells is also used for balancing the filter cell capacitor voltages. The cell pulse pattern, which has been determined with pulse width modulation, is adjusted (before it is supplied to the model predictive control part) such that the filter cells will be better balanced. To achieve this, the switching instants of the cell pulse pattern are moved, such that this objective is achieved. Balancing means that the cell capacitor voltage is moved towards a cell capacitor voltage reference. The cell capacitor voltage reference may be the desired voltage of the cell capacitor.

For example, a typical configuration of an electrical converter with 3L(A)NPC+AF topology (see above) foresees a rather low cell voltage of a filter cell, typically 1/3 of half the DC link voltage of the main stage or lower. Already for a ratio of 1/3, but even more for lower ratios, the reference signal for the cell output voltage may drive its pulse width modulator periodically into an overmodulation range. As a consequence, the filter cell output voltage may have a non-zero average over a modulation period of the main converter what may lead to continuous discharging/charging of the filter cell. By adjusting the cell pulse pattern as described above, such an overmodulation can be avoided.

The adjusting of the cell pulse pattern, which is done in the time domain, in this way does not rely on power transfer at the fundamental frequency and therefore can operate even at zero fundamental frequency (stand-still). The approach also operates very well during transients. The cell voltages may be stabilized very effectively.

According to an embodiment of the invention, the cell pulse pattern is determined from a difference of a differential mode signal of the voltage reference signal and a differential mode signal of the main stage voltage signal determined from the main pulse pattern. In such a way, the differential mode signal of the average output voltage reference of the filter cells, which has been subtracted from the voltage reference signal for determining the main pulse pattern, can be compensated.

According to an embodiment of the invention, the steps in the pattern determination part are performed once during the modulation period. The modulation period may be a full or half pulse width modulation cycle of the main stage. The modulation period also may be aligned with the pulse width modulation cycle of the main stage. For a carrier frequency of the main stage of 150 Hz, the pattern determination part may run at 150 Hz or 300 Hz update frequency as a background task, leaving enough computational resource for other fast control blocks, such as the model predictive control part.

Online calculation of the main pulse pattern and the cell pulse pattern, the balancing of the filter cells and the corresponding adjustment of the cell pulse pattern, as well as the calculation of the flux reference trajectory can be executed with a reduced update frequency, for example between 150 and 300 Hz. Compared to the speed of the model predictive control part, this may be seen as a long time period. Due to the low update frequency of the pattern determination part, sufficient time is available for computations, i.e. the computational burden is relaxed. Execution of the model predictive control part may be independent and/or may typically need a higher update frequency for closed-loop control.

According to an embodiment of the invention, the steps in the pattern determination part are performed by a pattern determination controller and the steps in the model predictive control part are performed by a model predictive controller. The two parts of the method, which are executed at different speed, may be performed by two different controllers. The model predictive controller may have a faster execution speed as the pattern determination controller. For example, the speed of the model predictive controller may be at least 10 times faster as the one of the pattern determination controller.

According to an embodiment of the invention, when a fundamental stator flux reference angle, for example commanded and/or requested by an outer loop controller is outside the angle range covered by the precomputed reference flux trajectory based on the main and cell pattern, the flux error is determined from a difference between the estimated flux of the electrical converter and a circular flux trajectory instead of from a difference between the estimated flux and the precomputed reference flux trajectory. According to an embodiment of the invention, the main pulse pattern, the cell pulse pattern and the flux reference trajectory are stored in a look-up table during the pattern determination part. The table may be provided in a common memory of the pattern determination controller and the model predictive controller. The content of the look-up table, which is provided by the pattern determination controller, is used by the model predictive controller.

According to an embodiment of the invention, the modulation period is at least a half of the carrier period for the pulse width modulation of the main stage. The pattern determination part may be executed with a time period $T_C$ or $T_C/2$, whereas $T_C$ may be the carrier period of the main stage for an equivalent carrier-based pulse width modulation scheme. If the main stage uses a frequency of 300 Hz, the modulation period as well as the execution period of the pattern determination part then may be 3.3 ms or 1.65 ms.

According to an embodiment of the invention, a carrier frequency for the pulse width modulation of the cell stage is at least 4 times higher than a carrier frequency for the pulse width modulation of the main stage. The filter cells may be switched more often than the main stage. This allows to reduce the total harmonic distortion of the output voltage and/or to damp higher order harmonics more effectively.

According to an embodiment of the invention, the pulse width modulation of the main stage and/or the filter cell stage is performed with a mathematical representation of a carrier-based pulse width modulator. The input signal of the respective modulator function and/or block for the main stage and the filter cell stage may be converted or provided as a mathematical function (for example a piecewise linear interpolation). Also the carrier signal may be provided as mathematical function (for example as triangular function). The intersection points of the two functions can be determined and from the intersection points, the switching instants can be determined.

In the chapter "pulse width modulation" of EP 3 729 637 A1, which is incorporated by reference, such a mathematical representation of pulse width modulation is described.

Further aspects of the invention relate to a computer program for controlling an electrical converter, which, when being executed by a processor, is adapted to carry out the steps of the method of one of the previous claims, and to a computer-readable medium, in which such a computer program is stored. Both the pattern determination part and the model predictive control part may be executed as software on one or more processors.

It may be that the pattern determination controller has a processor and that the pattern determinant part is executed on this processor. The pattern determinant part may be stored in a memory of the pattern determination controller.

It also may be that the model predictive controller has a processor and that the model predictive control part is executed on this processor. The model predictive control part may be stored in a memory of the model predictive controller.

A computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a non-transitory or transitory medium.

A further aspect of the invention relates to a controller for controlling an electrical converter. The controller is adapted for performing the method as described herein. The controller may comprise a pattern determination controller for performing the steps in the pattern determination part of the method. The controller may comprise a model predictive controller for performing the steps in the model predictive control part of the method.

The controller may comprise one or more processors, in which the method is run as software. It also may be that the method is at least partially or completely implemented in hardware, such as a DSAP or FPGA.

A further aspect of the invention relates to an electrical converter, which is controlled such as described herein.

According to an embodiment of the invention, the electrical converter comprises a main stage adapted for converting a DC voltage into an intermediate voltage comprising at least two voltage levels, a filter cell stage with a filter cell for each phase of the intermediate voltage, wherein each filter cell is adapted for adding or subtracting a cell voltage of the filter cell to the intermediate voltage, and a controller such as described herein.

In general, it has to be understood that features of the method as described in the above and in the following may be features of the computer program, the computer-readable medium, the controller and the electrical converter as described in the above and in the following, and vice versa.

These and other aspects of the invention will be apparent from and elucidated with reference to the embodiments described hereinafter.

BRIEF DESCRIPTION OF THE DRAWINGS

The subject-matter of the invention will be explained in more detail in the following text with reference to exemplary embodiments which are illustrated in the attached drawings.

Fig. 1 shows a schematic circuit diagram of an electrical converter according to an embodiment of the invention.

Fig. 2 shows a schematic block diagram of a controller according to an embodiment of the invention.

Fig. 3 shows two diagrams illustrating an adjustment of a cell pulse pattern used in a control method according to an embodiment of the invention.

Fig. 4 shows a diagram illustrating signals and trajectories used in a control method according to an embodiment of the invention.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

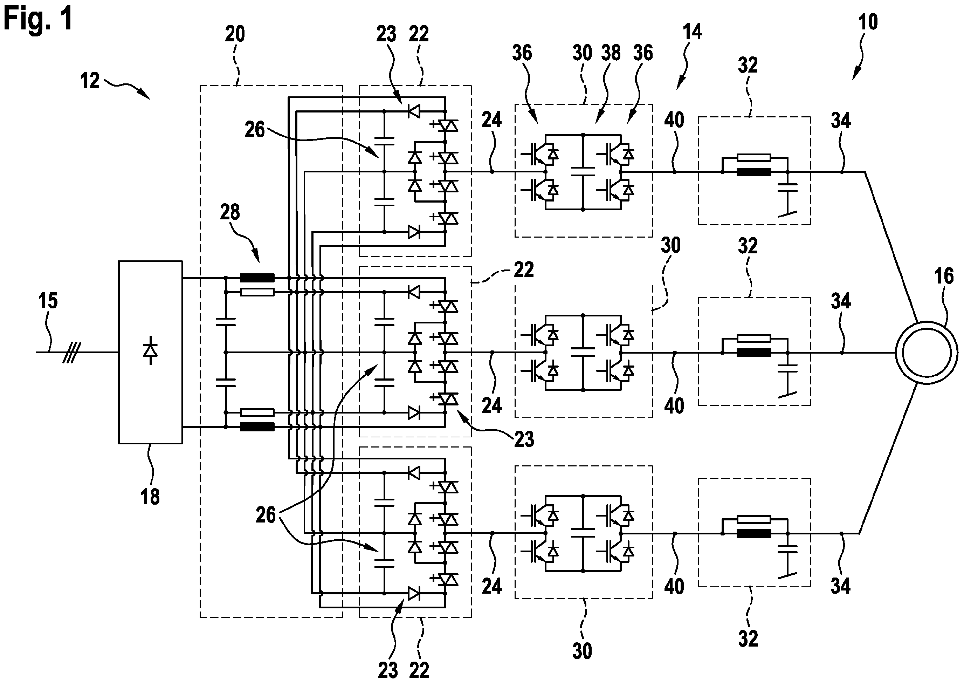

Fig. 1 shows an electrical converter 10 with a main stage 12 and a filter cell stage 14. The electrical converter 10 is adapted for transforming a first AC voltage provided by a power grid 15 into an output voltage to be supplied to an electrical load 16.

The main stage 12 comprises a rectifier 18, which may be a passive diode rectifier and which is adapted for converting the AC voltage from the power grid 15 into a DC voltage, which is supplied to a main DC link 20.

Furthermore, the main stage 12 comprises three output converters 22, each of which is adapted for transforming the DC voltage in the DC link 20 into a phase of an intermediate voltage that is provided at outputs 24 of the main stage 12. The output converters 22 are connected in parallel to the DC link 20, for example via clamp inductors and/or resistors 28 or directly. Each of the output converters 22 may comprise a clamp circuit 26 and/or DC links 26 with two capacitors. The DC links 20, 26 may be split DC links.

Each of the output converters 22 may comprise, as shown, a 3-level neutral point clamped (3LNPC) half-bridge 23, which may be based on IGCTs, but other topologies and semiconductor types are possible. The half-bridges 23 also may be ANPC half-bridges. Also, for the overall main stage 12, other topologies are possible. In general, the main stage 12 may be adapted to provide a two- or multi-level intermediate voltage at the outputs 24, optionally with more than one phase. A half-bridge 23 as shown in Fig. 1 is adapted for generating three different voltage levels for the respective phase of the intermediate voltage.

The inductors 28 provide an IGCT di/dt clamp circuit. In the case of other types of semiconductor switches, such as IGBTs, the inductors 28 may be omitted. The clamp circuits 26 may be used for controlling a device voltage during switching. The clamp circuits 26, normally used for IGCT switches, may or may not be omitted for other choices of semiconductor switches.

For every phase of the main stage 12, the filter cell stage 14 comprises a filter cell 30, which may be seen as an active filter, and optionally a passive output filter 32, which are connected in series between the respective output 24 of the main stage 12 and an output 34 of the electrical converter 10. It may be possible that more than one filter cell 30 is connected in series and/or in parallel between the output 24 and the output 34 of a phase.

Every filter cell 30 comprises two half-bridges 36, which are connected in parallel with a cell capacitor 38. A first midpoint of one of the half-bridges 36 is connected to the output 24 of the main stage 12. A second midpoint of the other one half-bridge 36 provides an output 40 of the filter cell 30 and is connected via the optional passive filter 32 with the respective output 34 of the electrical converter 10.

The filter cells 30 comprise three different switching states, that may be reached by accordingly switching their semiconductor switches (two per half-bridge), which, for example, may be IGBTs. In a first switching state, the filter cell 30 directly connects the output 24 with the output 40. In a second switching state, the converter cell 30 connects the cell capacitor 38 between the outputs 24, 40, such that the cell capacitor voltage of the cell capacitor 39 is added to the intermediate voltage provided at the output 24. In a third switching state, the filter cell 30 connects the cell capacitor 38 between the outputs 24, 40, such that the cell capacitor voltage of the cell capacitor 38 is subtracted to the intermediate voltage provided at the output 24. In such a way, the intermediate voltage from the main stage 12, which usually is shaped like a step-function due to the finite number of levels of the main stage, may be converted into a voltage (i.e. the output voltage) which better approximates a sinusoidal and/or continuous output voltage reference.

Each of the passive filters 32 may comprise inductors, resistors and/or capacitors for electrical filtering the output voltage for even more damping higher order harmonics.

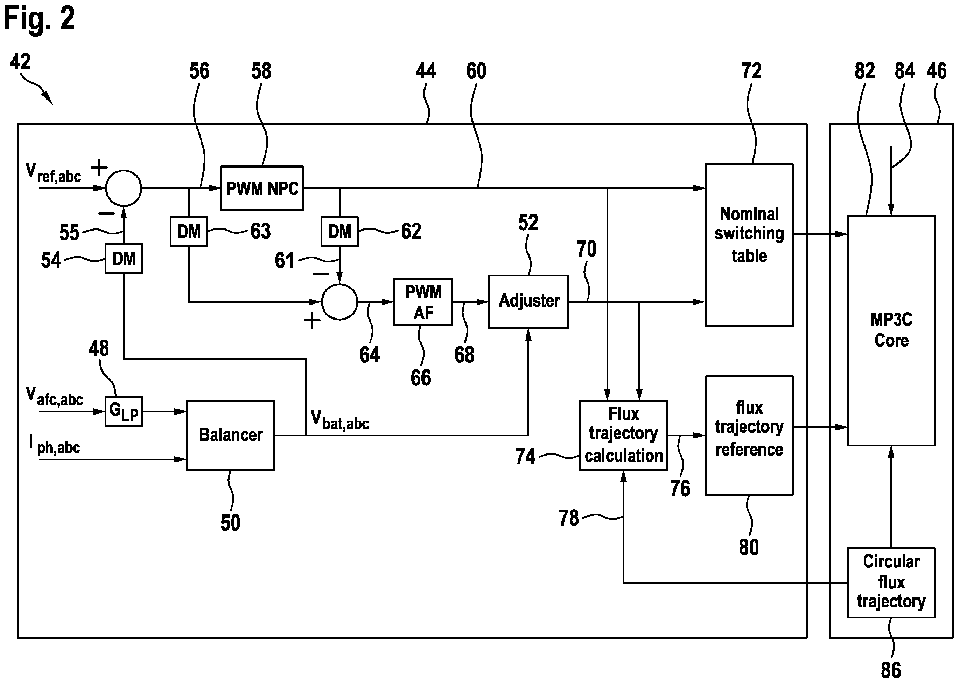

Fig. 2 shows a block diagram for a controller 42, which is composed of a pattern determination controller 44 and a model predictive controller 46. With the controller 42, the electrical converter 10 of Fig. 1 may be controlled. The blocks of the controller also indicate method steps of a control method performed by the controller. The block of the pattern determination controller 44 also may be seen as the pattern determination part of the control method. The block of the model predictive controller 46 also may be seen as the model predictive control part of the method.

The pattern determination part 44 may be executed with a time period $T_c$ or $T_c/2$, whereas $T_c$ is the carrier period of the main stage 12 for an equivalent carrier-based PWM scheme. If the main stage 12 uses a frequency of 300 Hz, the execution period could be 3.3 ms or 1.65 ms.

Based on a fundamental flux reference angle provided by an outer loop torque controller, a voltage reference signal $V_{ref,abc}$ for the next modulation period $T_c$ (or $T_c/2$) is calculated. The voltage reference signal $V_{ref,abc}$ may be vector-valued. This can be done, e.g., by rotating the fundamental stator flux reference angle by 90° and scaling the length of the voltage vector with the speed (in case for operation with constant flux reference). For field-weakening, the magnitude of the voltage reference signal $V_{ref,abc}$ may have to be further scaled. To compensate the delay of the pulse width modulation method used below, the angle may be further rotated by an equivalent angle corresponding to $T_c/2$ (or $T_c/4$). The voltage reference signal $V_{ref,abc}$ may further include a common mode voltage signal to balance the neutral potential of the main stage 12 and/or to further improve the voltage quality with space vector equivalent modulation.

The cell capacitor voltages $V_{afc,abc}$ of the filter cells 30 in the three phases are measured individually and optionally processed with a low pass filter 48, $G_{LP}$.

In the active filter cell balancer 50, the differences of the cell capacitor voltages $V_{afc,abc}$ compared to a cell capacitor reference voltage are processed with P- or Pi-controllers. The output signals can be interpreted as non-zero average output voltage reference $V_{bal,abc}$ that need to be injected by the filter cells 30 in order to accumulate charge in the cell capacitor 38 of the filter cells 30 and consequently charge or discharge the cell capacitor 38. If the cell voltage matches the reference voltage, the average output voltage created by the filter cell 30 over one modulation period $T_c$ (or $T_c/2$) should be zero and the entire volt-seconds over a modulation period are provided by the main stage 12. In the balancer 50, the signs of the phase currents $I_{ph,abc}$ need to be accounted for, such that the average voltage command for the filter cell 30 drives the cell voltage in the correct direction, i.e., the P- or PI-controller outputs are multiplied with the sign of the corresponding phase current $I_{ph,abc}$. The output signals $V_{bal,abc}$ of the balancer 50 are used as references for the filter cell voltage average adjuster 52.

In block 54, the differential mode (DM) component 55 of $V_{bal,abc}$ is determined. The differential mode component 55 of $V_{bal,abc}$ is subtracted from the voltage reference signal $V_{ref,abc}$ to form a compensated voltage reference signal 56. This is done to compensate the additional voltage injected by the filter cells 30 caused by the adjustments generated by adjuster (see below). Consequently, the sum of the output voltage of the main stage 12, i.e. the intermediate voltage, and the output voltage of the filter cell stage 14 is unchanged and there is no impact on the fundamental flux trajectory and torque control.

In the main stage modulator 58, the main pulse pattern 60 over the next modulation period $T_c$ (or $T_c/2$) for the main stage 12 is calculated from the compensated voltage reference signal 56.

The main pulse pattern 60 is composed of switching instants for the three phases, wherein each switching instant comprises a switching state and a switching time. The switching times for the main pulse pattern 60 are provided over next modulation period of the main stage 12.

The calculation of the main pulse pattern 60 is done using a mathematical representation of a carrier-based pulse width modulation. The compensated voltage reference signal 56 may be provided as a mathematical function, for example as a piecewise linear interpolation and/or may be represented as arrays of voltage and time entries. Also the carrier signal may be provided as mathematical function (for example as triangular function). The intersection points of the two functions can be determined and from the intersection points, the switching instants can be determined. In the chapter "pulse width modulation" of EP 3 729 637 A1, which is incorporated by reference, such a mathematical representation of pulse width modulation is described.

The difference signal 64 between the compensated voltage reference signal 56 and the created voltage pulses 61 of the main stage 12, which are encoded in the main pulse pattern 60, is formed. For this, only the differential mode components for the respective signals provided by blocks 62 and 63 may be used because the common mode component is not filtered by the filter cells. Consequently, the differential mode components of the compensated voltage reference signal 56 and the created voltage pulses 61 are calculated first before computing the difference signal 64. The voltage pulse 61 can be seen as a main stage voltage signal 61, which is determined from the main stage pulse pattern 60. The phase components of the difference signal 64 are the reference signals for the filter cells 30.

The phase components of the difference signal 64 may be represented as arrays of voltage and time entries over $T_c$ (or $T_c/2$). The same applies to the phase components of the reference voltage signals $V_{ref,abc}$ 56 and to the main stage voltage signal 62.

In the filter cell stage modulator 66, the difference signal 64 for the filter cell stage 14 is used to determine the initial cell pulse pattern 68 of the filter cell stage 14 over the next modulation period $T_c$ (or $T_c/2$).

The initial cell pulse pattern 68 is calculated using a mathematical representation of carrier-based pulse width modulation. This may be done as described with respect to the main stage modulator 58 but starting with the difference signal 64.

The carrier frequency for the filter cell stage modulator 66 is higher compared to the carrier frequency of the main stage modulator 58. For example, a factor of 8 between the filter cell stage carrier frequency and the main stage carrier frequency may be used.

The initial cell pulse pattern 68 is composed of switching instants for the three phases, wherein each switching instant comprises a switching state and a switching time. The switching times for the initial cell pulse pattern 68 are provided over next modulation period of the main stage 12. The same applies for the final cell pulse pattern 70.

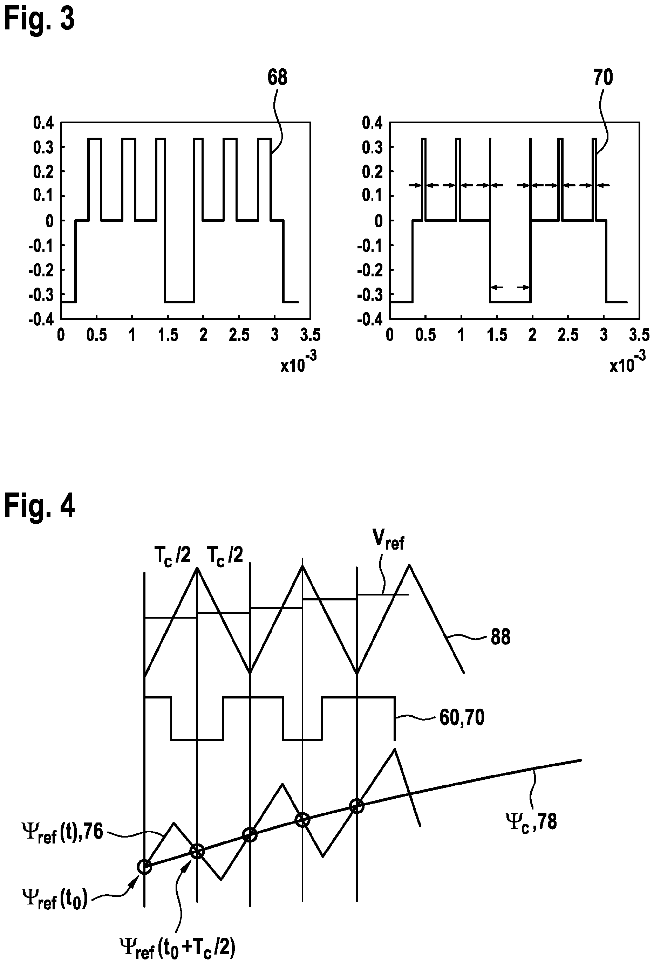

The initial cell pulse pattern 68 is adjusted to form the (final) cell pulse pattern 70. This is done to enforce specific average output voltage injection over the modulation period $T_c$ (or $T_c/2$). If the commands of the average output voltage reference $V_{bal,abc}$ from the balancer are zero, the average voltage injection of the filter cells 30 over the modulation period $T_c$ (or $T_c/2$) should be zero. Otherwise, the injected average output voltages over the modulation period $T_c$ (or $T_c/2$) should correspond to the average output voltage reference $V_{bal,abc}$. The pulse pattern adjustment is done in the time-domain, i.e. the precomputed switching instants of the initial cell pulse pattern 68 are moved such that the requested average voltage is achieved. This will be described in more detail with respect to Fig. 3.

In block 72, the main pulse pattern 60 for the main stage 12 and the cell pulse pattern 70 for the filter cell stage 14 are stored in a look-up table. There, the pulse patterns 60, 70 are available for the next modulation period $T_c$ (or $T_c/2$) for the model predictive controller 46.

In block 74, the flux reference trajectory 76 corresponding to the main pulse pattern 60 and the cell pulse pattern 70 is calculated. The flux reference trajectory 76 includes the accurate ripple generated by the main pulse pattern 60 and the cell pulse pattern 70.

With pulse width modulation, at the beginning of the modulation period $T_c$ (or $T_c/2$), the flux reference trajectory 76 always crosses the circular reference trajectory 78. Therefore, the circular reference trajectory 78 corresponding to the stator flux reference angle at the beginning of the modulation period $T_c$ (or $T_c/2$) can be used as a starting point to calculate the flux reference trajectory 76. The rest of the flux reference trajectory 76 over the modulation period $T_c$ (or $T_c/2$) is obtained with piecewise integration of the combined pulse patterns 60, 70 of the main stage 12 and the filter cell stage 14.

In block 80, the flux reference trajectory 76 is stored in a look-up table. There, the flux reference trajectory 76 is available for the next modulation period $T_c$ (or $T_c/2$) for the model predictive controller 46.

It is also possible that the pattern determination controller 44 calculates the pulse patterns 60, 70 and the flux reference trajectory 76 for the over-next modulation period $T_c$ (or $T_c/2$). This may simplify an implementation on a microcontroller because the method may be run in a lower-priority interrupt and may compute the patterns 60, 70 for the over-next modulation period while the model predictive controller 46 works on the active modulation period that has been computed previously.

The model predictive controller 46 comprises an MP3C (model predictive pulse pattern control) core 82, which executes the pulse patterns 60, 70 and controls the stator flux to follow the flux reference trajectory 76. For this, the core 82 reads the pulse patterns 60, 70 and the flux reference trajectory 76 from the look-up tables and receives an estimated flux 84, which is calculated from measurements in the electrical converter 10.

The model predictive control part as well as the model predictive control may be performed like in EP 2 469 692 A1, which is incorporated by reference. Also, in the chapter "pattern controller" of EP 3 729 637 A1, which is incorporated by reference, model predictive control of pulse patterns created based on pulse width modulation is described.

In general, the tasks and/or method steps of the model predictive control part are performed several times during modulation period $T_c$ (or $T_c/2$).

The main pulse pattern 60 and the cell pulse pattern 70 are modified by moving at least one transition time and/or time point of a switching instant, such that a flux error determined from a difference between the estimated flux 84 of the electrical converter 10 and the reference flux trajectory 76 is minimized. To this end, an objective function is used, into which the transition times and/or time points of the switching instants are input.

At least a next switching instant from the modified main pulse pattern 60 and the modified cell pulse pattern 70 is then applied to the electrical converter 10. This means that the switches of the main stage 12 and the filter cell stage 14 are switched at the transition time of the next switching instant to the switching position as indicated by the next switching instant.

The circular flux reference trajectory 78 is calculated in block 86.

In case there is a torque step or any other disturbance that leads to a stator flux reference angle which is outside of the angle range corresponding to the precomputed modulation period $T_c$ (or $T_c/2$), the flux reference trajectory 76 is skipped and the circular flux reference trajectory 78 at the stator flux reference angle is used instead.

In the following, possible embodiments of the blocks of Fig. 2 are described in more detail.

Filter cell balancer 50

The filter cell balancer 50 may be implemented as a P controller or a PI controller. It operates on the difference of the capacitor voltage of the filter cell 30 in phase k to the reference capacitor voltage. The capacitor voltage may be filtered with the low-pass filter 48. The output of the filter cell balancer 50 is multiplied with the sign of the current $I_{ph}$ in the corresponding phase.

$$V_{bal,k} = G_{PI}(s) \cdot (V_{c,ref} - G_{LP}(s) \cdot V_{afc,k}) \cdot sign(I_{ph,k})$$

The balancing voltage $V_{bal}$ or average output voltage reference $V_{bal}$ will be injected by the filter cells 30 in order to control the cell DC link voltage to the cell reference voltage $V_{c,ref}$. In order not to disturb the total volt-seconds (the sum of the main stage 12 output voltage and the filter cell output voltage over a modulation period) and therefore to ensure that the flux reference trajectory 76 returns to the original reference at the end of a modulation period, the average voltage reference $V_{bal}$ needs to be subtracted from the voltage reference $V_{ref}$ of the main stage 12. Only the differential mode part 55 needs to be subtracted from the reference voltage reference $V_{ref}$. It is computed for phase k as follows.

$$V_{bal,DM,k} = V_{bal,k} - \frac{1}{3}(V_{bal,a} + V_{bal,b} + V_{bal,c})$$

Main stage pulse width modulator 58

The main stage pulse width modulator 58 may be a mathematical representation of a 3-level carrier-based pulse width modulation block. It computes the switching times and the corresponding switching positions (i.e. the switching instants) for every phase of the main stage 12 for the next modulation period $T_c$ (or $T_c/2$) and saves them in arrays. The input signal 56 to the modulator 58 for phase k is given as

$$V_{ref,npc,k} = V_{ref,k} - V_{bal,DM,k}$$

The input signals may be constant over a modulation period $T_c$ (or $T_c/2$)

Filter cell stage pulse width modulator 66

This filter cell stage pulse width modulator 66 may be a mathematical representation of a 3-level carrier-based pulse width modulation block. It computes the switching times and the corresponding switching positions (i.e. the switching instants) for the filter cell 30 in each phase for the next modulation period $T_c$ (or $T_c/2$) and saves them in an array. The input signal to the modulator 66 for phase k is given as

$$V_{ref,af,k}(t_i) = V_{ref,npc,DM,k} - V_{npc,DM,k}(t_i)$$

The input signals to the modulator 66 are piecewise constant. The signal for phase k changes at the time point $t_i$ within the modulation period $T_c$ (or $T_c/2$). It is calculated with the actual differential mode voltage 61 for each switching position of the main stage 12 for each switching time in every phase and the differential mode voltage of the reference signal 56.

$$V_{npc,DM,k}(t_i) = V_{npc,k}(t_i) - \frac{1}{3}\big(V_{npc,a}(t_i) + V_{npc,b}(t_i) + V_{npc,c}(t_i)\big)$$

$$V_{ref,npc,DM,k} = V_{ref,npc,k} - 1/3\big(V_{ref,npc,a} + V_{ref,npc,b} + V_{ref,npc,c}\big)$$

For every switching position change in any phase of the main stage 12, a new reference entry with time $t_i$ needs to be created.

The modulator 66 computes the switching positions and switching times for the filter cell 30 in phase k using the piecewise constant input signals and the mathematical representation of the modulator. It is possible to add a space-vector equivalent common-mode voltage to the input signal to improve the final voltage quality.

Again, the switching times and positions for every filter cell are saved in arrays.

Filter cell average voltage adjuster 52

Ideally, the average voltage injected by a filter cell 30 over a modulation period should be zero, because the total volt-seconds should be provided only by the main stage 12. Otherwise, the filter cell 30 would charge or discharge. Due to overmodulation effects, especially if the nominal voltage of the filter cell 30 is very low compared to the half DC link voltage of the main stage 12, it is possible that the average filter cell output voltage over a modulation period often is not equal to zero.

Fig. 3 shows an example of a cell pulse pattern 68 before and a cell pulse pattern 70 after the adjustment. The curves show the switching instants (where the switching signal changes) over time, which is depicted to the right.

For the cell pulse pattern 68, the average filter cell output voltage over a modulation period is not zero. For the cell pulse pattern 70 with the adjusted switching times, the average filter cell output voltage over a modulation period is equal to the average output voltage reference $V_{bal}$ computed by the balancer. It may be zero if the cell capacitor voltage is equal to the capacitor reference voltage.

The adjuster 52 adjusts the average output voltage over a modulation period and makes it equal to the voltage reference $V_{bal}$ of the balancer 50. This is achieved by moving the switching times of the cell pulse pattern 68 until the expected average voltage is achieved.

In a first step, the average filter cell output voltage $V_{af,k}$ over a modulation period, before the modifications are applied, is calculated with

$$\overline{V_{af,k}} = \frac{1}{T_c}\sum_{i=0}^{N-1} V_{af,k}(t_i)\cdot(t_{i+1} - t_i)$$

In a second step, the individual switching instants $t_i$ are moved. To reduce the average voltage, positive voltage steps are moved to the right (postponed), whereas negative voltage steps are moved to the left (advanced) as shown in Fig. 3 on the right side. To increase the average voltage, the respective steps are moved in the opposite direction.

Several strategies about how to move the switching instants are possible. One method aims to move all the available switching instants by the same time shift to achieve the total shift. To distribute the total required shift equally to the available (movable) voltage transitions Ntr, the following equation can be used to calculate the time shift which needs to be applied to every switching instant.

$$\Delta T = T_c\cdot\frac{\overline{V_{af,k}} - V_{bal,k}}{r_{AF}}\cdot\frac{1}{N_{tr}}$$

$r_{AF}$ is the ratio between the nominal filter cell capacitor voltage and half the DC link voltage of the main stage 12. Applying $\Delta T$ to every switching instant ensures that the filter cell average output voltage is equal to the voltage command $V_{bal}$ of the balancer 50 after the modification. It is also possible that constraints restrict how much a certain switching instant can be moved, or that certain switching instants should not be moved at all, e.g. if they are synchronized with the switching of the main stage 12. Furthermore, one could distribute the total required time shift differently to the available switching instants (e.g. try to achieve the total shift by moving the first switching instants as much as possible) or try to achieve the adjusted average by performing the method several times.

Flux trajectory calculation block 74

In the block 74, the pulse patterns 60, 70 for the main stage 12 and the filter cell stage 14 are combined and the reference flux trajectory 76 is precomputed for the next modulation period $T_c$ (or $T_c/2$).
The advantages of a precomputed reference flux trajectory 76 are the following: if a circular flux trajectory 78 is used instead, the MP3C core 82 will move the switching instants in the provided pulse patterns 60, 70 to approximate the circular flux reference 78 as closely as possible. The previously determined pulse patterns 60, 70 would be at least partially overruled and would not be applied as precomputed. Consequently, the modifications introduced to balance the filter cell voltages may not be applied at least completely and the cell voltages may drift and would not be completely controlled.
Therefore, precomputation of the flux reference including the ripple component is beneficial. As the presented method is based on carrier based pulse width modulation, the reference flux trajectory 76 has a well-known characteristic shape. One property of pulse width modulation is that the flux ripple will cross the circular flux trajectory 78 every half modulation period.
This is shown in Fig. 4, which shows the modulation period $T_c/2$, a carrier signal 88, the voltage reference signal $V_{ref}$, the pulse pattern 60, 70 determined therefrom, the reference flux trajectory $\Psi_{ref}$, 76 and the circular flux trajectory $\Psi_c$, 78.
It is intended to provide the total volt-seconds with the main stage 12 only and this property is maintained even with the filter stage 14 included. Therefore, it can be assumed that the flux ripple starts on the circular reference $\Psi_c$, 78 at the beginning of the modulation period $T_c$ (or $T_c/2$) of the main stage 12.
Due to the shift of the filter cell average output voltage to $V_{bal}$, and the respective subtraction (compensation) of $V_{bal}$ in the reference voltage of the main stage 12, the sum of the average output voltages of the main stage 12 and the filter cell stage 14 over the modulation period $T_c$ (or $T_c/2$) stays unchanged and corresponds to the original reference voltage $V_{ref}$. Therefore, after the modulation period $T_c$ (or $T_c/2$), the flux reference trajectory $\Psi_{ref}$, 76 will finally arrive again at the circular reference trajectory $\Psi_c$, 78.
The flux reference trajectory $\Psi_{ref}$, 76 may be precomputed with simple forward integration. First, the starting point is determined according to the circular flux trajectory

$$\Psi_{ref,\alpha\beta}(t_0) = \Psi_{c,\alpha\beta}(t_0)$$

(here $\alpha\beta$ corresponds to the $\alpha\beta$-frame). Next, the pulse patterns 60, 70 of the main stage 12 and the filter cell stage 14 are merged and transformed to the stationary, orthogonal ($\alpha\beta$) reference frame.

$$V_{tot,k} = V_{npc,k} + V_{AF,k}$$

$$V_{tot,\alpha\beta} = Y_{Clarke} \cdot \begin{bmatrix} V_{tot,a} \\ V_{tot,b} \\ V_{tot,c} \end{bmatrix}$$

$$Y_{Clarke} = \frac{2}{3} \cdot \begin{bmatrix} 1 & -\frac{1}{2} & -\frac{1}{2} \\ 0 & \frac{\sqrt{3}}{2} & -\frac{\sqrt{3}}{2} \end{bmatrix}$$

$V_{npc,k}$ is the k.th phase component of the voltage generated by the main pulse pattern 60 and $V_{AF,k}$ is the k.th phase component of the voltage generated by the cell pulse pattern 70.

Finally, the flux trajectory corner points at the switching time instants $t_j$ are calculated with the cumulative sum

$$\Psi_{ref,\alpha\beta}(t_j) = \Psi_{ref,\alpha\beta}(t_{j-1}) + V_{tot,\alpha\beta}(t_{j-1}) \cdot (t_j - t_{j-1})$$

which can be considered as discrete integration.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

**Claims**

1. A method for controlling an electrical converter (10), the electrical converter (10) comprising a main stage (12) adapted for converting a DC voltage into an intermediate voltage comprising at least two voltage levels and a filter cell stage (14) with a filter cell (30) for each phase of the intermediate voltage, each filter cell (30) being adapted for adding or subtracting a cell voltage of the filter cell (30) to the intermediate voltage,

   the method comprising a pattern determination part (44) comprising the steps of:

   determining a main pulse pattern (60) for the main stage (12) with pulse width modulation, wherein the main pulse pattern (60) is determined from a voltage reference signal ($V_{ref,abc}$) for the output voltage and wherein the main pulse pattern (60) comprises switching instants for the main stage (12) over a next modulation period of the main stage (12);
   determining a cell pulse pattern (70) for the filter cell stage (14) with pulse width modulation, wherein the cell pulse pattern (70) is determined from a difference of the voltage reference signal ($V_{ref,abc}$) and a main stage voltage signal (62) determined from the main pulse pattern (60) and wherein the cell pulse pattern (70) comprises switching instants for the filter cells (30) over the next modulation period;

   and the method comprising a model predictive control part (46) comprising the following steps, which are performed several times during the next modulation period:

   modifying the main pulse pattern (60) and the cell pulse pattern (70) by moving at least one transition time of a switching instant, such that a flux error determined from a difference between an estimated flux (84) of the electrical converter (10) and a reference flux trajectory (76) is minimized;
   applying at least a next switching instant from the main pulse pattern (60) and the cell pulse pattern (70) to the electrical converter (10).

2. The method of claim 1, the pattern determination part (44) further comprising:
   determining the flux reference trajectory (76) over the next modulation period from the main pulse pattern (60) and the cell pulse pattern (70).

3. The method of claim 1 or 2, further comprising:
   determining a differential mode component (55) of an average output voltage reference ($V_{bal,abc}$) of the filter cells, which is determined from measurements in the filter cells (30), and subtracting the differential mode component (55) from the voltage reference signal ($V_{ref,abc}$) before the main pulse pattern (60) is determined.

4. The method of one of the previous claims, further comprising:

   adjusting the cell pulse pattern (70) in the pattern determination part (44) of the method;
   wherein during adjusting, switching instants of the cell pulse pattern (70) are moved, such that average output voltages generated in the filter cells (30) by the cell pulse pattern (70) are shifted towards an average output voltage reference ($V_{bal,abc}$) of the filter cells (30), which is determined from measurements in the filter cells.

5. The method of claims 3 or 4,
   wherein each phase of the average output voltage reference ($V_{bal,abc}$) corresponding to a filter cell (30) is based a difference of a measured capacitor voltage signal ($V_{afc,abc}$) of the filter cell (30) and a reference capacitor voltage of the filter cell (30).

6. The method of one of the previous claims,
   wherein the cell pulse pattern (70) is determined from a difference of a differential mode signal of the voltage reference signal ($V_{ref,abc}$) and a differential mode signal of the main stage voltage signal (62) determined from the main pulse pattern (60).

7. The method of one of the previous claims,
   wherein the steps in the pattern determination part (44) are performed once during the modulation period.

8. The method of one of the previous claims,

   wherein the steps in the pattern determination part are performed by a pattern determination controller (44);
   wherein the steps in the model predictive control part are performed by a model predictive controller (46), which has a faster execution speed as the pattern determination controller.

9. The method of one of the previous claims,
   wherein, when a fundamental flux reference is outside an angle range provided by the reference flux trajectory (76), the flux error is determined from a difference between the estimated flux of the electrical converter (10) and a circular flux trajectory (78).

10. The method of one of the previous claims,
    wherein the main pulse pattern (60), the cell pulse pattern (70) and the flux reference trajectory (76) are stored in a look-up table during the pattern determination part.

11. The method of one of the previous claims,
    wherein the modulation period is at least a half of the carrier period ($T_c$) for the pulse width modulation of the main stage (12).

12. The method of one of the previous claims,

    wherein a carrier frequency for the pulse width modulation of the filter cell stage (14) is at least 4 times higher than a carrier frequency for the pulse width modulation of the main stage (12); and/or
    wherein the pulse width modulation of the main stage (12) and/or the filter cell stage (14) is performed with a mathematical representation of carrier-based pulse width modulation.

13. A computer program for controlling an electrical converter (10), which, when being executed by a processor, is adapted to carry out the steps of the method of one of the previous claims.

14. A computer-readable medium, in which a computer program according to claim 13 is stored.

15. A controller (42) for controlling an electrical converter adapted for performing the method of one of claims 1 to 12, the controller comprising:

    a pattern determination controller (44) for performing the steps in the pattern determination part of the method;
    a model predictive controller (46) for performing the steps in the model predictive control part of the method.

16. An electrical converter (10), comprising:

    a main stage (12) adapted for converting a DC voltage into an intermediate voltage comprising at least two voltage levels;
    a filter cell stage (14) with a filter cell (30) for each phase of the intermediate voltage, wherein each filter cell (30) is adapted for adding or subtracting a cell voltage of the filter cell to the intermediate voltage;
a controller (42) according to claim 15.

Fig. 1

# Fig. 2

EP 4 277 109 A1

# Fig. 3

# Fig. 4

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 846 327 A1 (ABB SCHWEIZ AG [CH]) 7 July 2021 (2021-07-07) * paragraphs [0001], [0030], [0037]; figures 1, 2, 3, 6(a),7 * | 1-16 | INV. H02M7/483 H02M7/49 H02M1/12 H02M1/00 H02J3/18 |
| A | EP 3 142 236 A1 (ABB TECHNOLOGY AG [CH]) 15 March 2017 (2017-03-15) * paragraphs [0010], [0022]; figures 4, 5 * | 1-16 | |
| A | US 2012/161685 A1 (GEYER TOBIAS [NZ] ET AL) 28 June 2012 (2012-06-28) * paragraphs [0047], [0048], [0123] – [0138]; claim 1; figures 2, 3, 10, 13-18 * | 1-16 | |
| A | WO 2018/172329 A1 (EGSTON POWER ELECTRONICS GMBH [AT]) 27 September 2018 (2018-09-27) * figure 2 * | 10,12 | |
| A | US 2019/190397 A1 (VAN-DER-MAERWEN WIM [CH] ET AL) 20 June 2019 (2019-06-20) * paragraph [0034]; figures 1, 4 * | 1-16 | TECHNICAL FIELDS SEARCHED (IPC) H02M H02J |

The present search report has been drawn up for all claims

| Place of search | Date of completion of the search | Examiner |
|---|---|---|
| The Hague | 20 October 2022 | Zeljkovic, Sandra |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 .................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 17 2910

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2022

| Patent document cited in search report | | | Publication date | Patent family member(s) | | | Publication date |
|---|---|---|---|---|---|---|---|
| EP | 3846327 | A1 | 07-07-2021 | CN | 114902544 | A | 12-08-2022 |
| | | | | EP | 3846327 | A1 | 07-07-2021 |
| | | | | EP | 4085518 | A1 | 09-11-2022 |
| | | | | WO | 2021136666 | A1 | 08-07-2021 |
| EP | 3142236 | A1 | 15-03-2017 | EP | 3142236 | A1 | 15-03-2017 |
| | | | | WO | 2017042388 | A1 | 16-03-2017 |
| US | 2012161685 | A1 | 28-06-2012 | BR | PI1107034 | B1 | 20-10-2020 |
| | | | | CN | 102545588 | A | 04-07-2012 |
| | | | | EP | 2469692 | A1 | 27-06-2012 |
| | | | | JP | 6138414 | B2 | 31-05-2017 |
| | | | | JP | 2012139092 | A | 19-07-2012 |
| | | | | KR | 20120073151 | A | 04-07-2012 |
| | | | | RU | 2011152831 | A | 27-06-2013 |
| | | | | US | 2012161685 | A1 | 28-06-2012 |
| WO | 2018172329 | A1 | 27-09-2018 | AT | 519842 | A1 | 15-10-2018 |
| | | | | EP | 3602762 | A1 | 05-02-2020 |
| | | | | WO | 2018172329 | A1 | 27-09-2018 |
| US | 2019190397 | A1 | 20-06-2019 | CN | 109565248 | A | 02-04-2019 |
| | | | | EP | 3497782 | A1 | 19-06-2019 |
| | | | | US | 2019190397 | A1 | 20-06-2019 |
| | | | | WO | 2018029303 | A1 | 15-02-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018029303 A1
- EP 3709497 A1
- EP 2469692 A1
- EP 3729637 A1
- WO 2019137916 A1